# EUROPEAN PATENT APPLICATION

(11) **EP 4 575 733 A1**
(43) Date of publication of application: **25.06.2025**
(21) Application number: 23854312.8
(22) Date of filing: 10.08.2023
(51) Int. Cl.: G06F 3/0481

(54) **METHOD FOR ACCESS TO MEDIA CONTENT, AND DEVICE AND COMPUTER-READABLE MEDIUM**

(30) Priority: 18.08.2022 CN 202210992754
(71) Applicant: DOUYIN VISION CO., LTD., Beijing 100041 (CN); Lemon Inc., Grand Cayman, KY1-1205 (KY)
(72) Inventor: YANG, Chenjian, Beijing 100028 (CN); TONG, Ziyi, Beijing 100028 (CN); SEKHRI, Aaron, Culver City, CA 90230 (US); GISH, Riley, Culver City, CA 90230 (US); TAN, Siqi, Culver City, CA 90230 (US)
(74) Representative: Dentons UK and Middle East LLP
(86) International application number: PCT/CN2023/112215
(87) International publication number: WO 2024/037410

(57) **Abstract**

Provided in the present disclosure are a method for access to media content, and a device and a computer-readable medium. The method comprises: in response to an interactive operation for a user interface, displaying a collection of media content to be unlocked, wherein the user interface is configured to display first media content, which is in a media stream; and in response to an unlocking operation for an access permission of the collection of said media content, displaying the unlocked collection of media content.

## Description

### CROSS-REFERENCE TO RELATED APPLICATIONS

The present application is based on and claims priority to China Patent Application No. 202210992754.4 filed on August 18, 2022, the disclosure of which is incorporated by reference herein in its entirety.

### TECHNICAL FIELD

The present disclosure relates to the field of multimedia technology, in particular toa method, device for accessing media content and a computer readable medium.

### BACKGROUND

The feed comprises a plurality of media contents, and a user can quickly shift between different media contents by shifting operations such as sliding the screen, so as to find the content of interest.

### SUMMARY

The summary of this invention is provided to introduce concepts in a brief form, which will be described in detail in the following detailed description. The summary of this invention is neither intended to identify the key features or essential features of the technical solution for which protection is sought, nor intended to be used to limit the scope of the technical solution for which protection is sought.

According to some embodiments of the present disclosure, a method for accessing media content is provided. The method comprises: displaying a media content collection to be unlocked in response to an interactive operation on a user interface, wherein the user interface is configured to display a first media content in a feed; and displaying the media content collection unlocked in response to an unlocking operation for an access right to the media content collection to be unlocked.

According to other embodiments of the present disclosure, a device for accessing media content is provided. The device comprises: a first display unit configured to display a media content collection to be unlocked in response to an interactive operation on a user interface, wherein the user interface is configured to display a first media content in a feed; and a second display unit configured to display the media content collection unlocked in response to an unlocking operation for an access right to the media content collection to be unlocked.

According to other embodiments of the present disclosure, an electronic device is provided. The device comprises: a memory; and a processor coupled to the memory, wherein the memory has instructions stored therein which, when executed by the processor, cause the electronic device to perform the method according to any one of the embodiments of the present disclosure.

According to other embodiments of the present disclosure, a computer readable storage medium is provided. The computer readable storage medium has stored thereon computer program which, when executed by a processor, implement the method according to any one of the embodiments of the present disclosure.

According to other embodiments of the present disclosure, a computer program is provided. The computer program comprises instructions that, when executed by a processor, cause the processor to perform the method according to any one of the embodiments of the present disclosure.

Other features, aspects and advantages of the present disclosure will become apparent from the following detailed description of exemplary embodiments of the present disclosure with reference to the accompanying drawings.

### BRIEF DESCRIPTION OF THE ACCOMPANYING DRAWINGS

Hereinafter, preferred embodiments of the present disclosure will be described with reference to the accompanying drawings. The accompanying drawings described herein are used to provide a further understanding of the present disclosure, and each of the accompanying drawings together with the following detailed description is comprised in this specification and forms a part of this specification to explain the present disclosure. It should be understood that, the accompanying drawings in the following description only relate to some embodiments of the present disclosure, but do not constitute a limitation to the present disclosure. In the accompanying drawings:
Fig. 1 is a flowchart showing a method for accessing media content according to an embodiment of the present disclosure;
Figs. 2A to 2D are schematic views schematically showing several user interfaces during a process of accessing media content according to some embodiments of the present disclosure;
Figs. 3A to 3B are schematic views schematically showing several user interfaces during a process of accessing media content according to other embodiments of the present disclosure;
Figs. 4A to 4B are schematic views schematically showing several user interfaces during a process of accessing media content according to other embodiments of the present disclosure;
Figs. 5A to 5C are schematic views schematically showing several user interfaces during a process of accessing a media content collection unlocked according to some embodiments of the present disclosure;
Figs. 6A to 6B are schematic views schematically showing several user interfaces during a process of accessing a media content collection unlocked according to other embodiments of the present disclosure;
Fig. 7 is a schematic view schematically showing a user interface during a process of accessing a media content collection unlocked according to other embodiments of the present disclosure;
Figs. 8A to 8C are schematic views schematically showing several user interfaces during a process of evaluating an media content collection according to some embodiments of the present disclosure;
Figs. 9A to 9C are schematic views schematically showing several user interfaces during a process of evaluating a media content collection according to other embodiments of the present disclosure;
Fig. 10 is a flowchart showing a method for publishing media content according to some embodiments of the present disclosure;
Fig. 11 is a web page view schematically showing that a media content collection is uploaded to a web page according to some embodiments of the present disclosure;
Figs. 12A to 12C are schematic views schematically showing several publishing interfaces during a process of publishing media content according to some embodiments of the present disclosure;
Fig. 13 is a block view schematically showing a structure of a device for accessing media content according to an embodiment of the present disclosure;
Fig. 14 shows a block view of some embodiments of a electronic device of the present disclosure; and
Fig. 15 is a block view showing an example structure of a computer system that may be employed according to an embodiment of the present disclosure.

It should be understood that, for ease of description, the sizes of various parts shown in the accompanying drawings are not necessarily drawn according to actual proportional relationships. The same or similar reference numerals are used in various accompanying drawings to denote the same or similar components. Therefore, once an item is defined in one accompanying drawing, it might not be discussed further in subsequent accompanying drawings.

### DETAILED DESCRIPTION

The technical solutions in the embodiments of the present disclosure will be explicitly and completely described below in conjunction with the accompanying drawings in the embodiments of the present disclosure. However, it is apparent that the described embodiments are only a part of the embodiments of the present disclosure, rather than all the embodiments. The following description of the embodiments is actually only illustrative, and by no means serves as any limitation to the present disclosure and its application or use. It should be understood that the present disclosure may be implemented in various forms, and should not be construed as being limited to the embodiments set forth herein.

It should be understood that the various steps recited in the method implementations of the present disclosure may be performed according to different sequences, and/or performed in parallel. In addition, the method implementations may comprise additional steps and/or omit to perform the illustrated steps. The scope of the present disclosure is not limited in this respect. Unless specifically stated otherwise, the relative arrangement of components and steps, the numerical expressions, and the values set forth in these embodiments should be construed as merely exemplary, but do not limit the scope of the present disclosure.

The term "comprising" and its variations used in the present disclosure represent an open term that comprises at least the following elements/features but does not exclude other elements/features, that is, "comprising but not limited to". In addition, the term "including" and its variations used in the present disclosure represent an open term that comprises at least the following elements/features, but does not exclude other elements/features, that is, "including but not limited to". Therefore, comprising and including are synonymous. The term "based on" means "at least partially based on".

The term "one embodiment", "some embodiments" or "an embodiment" throughout the specification means that a specific feature, structure, or characteristic described in combination with the embodiment(s) is comprised in at least one embodiment of the present disclosure. For example, the term "one embodiment" means "at least one embodiment"; the term "another embodiment" means "at least one additional embodiment"; and the term "some embodiments" means "at least some embodiments". Moreover, the presences of the phrases "in one embodiment", "in some embodiments" or "in an embodiment" in various places throughout the specification do not necessarily all refer to the same embodiment, but may also refer to the same embodiment.

It should be noted that the concepts such as "first" and "second" mentioned in the present disclosure are only used to distinguish different devices, modules or units, but not used to limit the order or interdependence of functions performed by these devices, modules or units. Unless otherwise specified, the concepts such as "first" and "second" are not intended to imply that the objects thus described have to follow a given order in terms of time, space or ranking, or a given order in any other manner.

It should be noted that the modifications of "one" and "a plurality of' mentioned in the present disclosure are illustrative and not restrictive, and those skilled in the art should understand that unless clearly indicated in the context otherwise, they should be understood as "one or more".

The names of messages or information exchanged between multiple devices in the embodiments of the present disclosure are only used for illustrative purposes, but not for limiting the scope of these messages or information.

The embodiments of the present disclosure will be described in detail below in conjunction with the accompanying drawings, but the present disclosure is not limited to these specific embodiments. The following specific embodiments may be combined with each other, and the same or similar concepts or processes will not be described in detail in some embodiments. In addition, in one or more embodiments, specific features, structures, or characteristics may be combined by those of ordinary skill in the art in any suitable manner that will be apparent from the present disclosure.

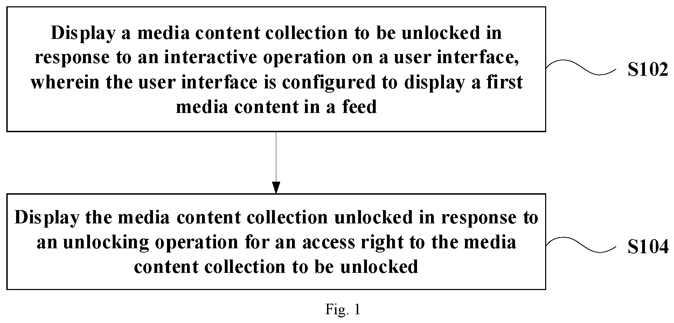

Fig. 1 is a flowchart showing a method for accessing media content according to an embodiment of the present disclosure. As shown in Fig. 1, the method comprises steps S102 to S104.

At step S102, a media content collection to be unlocked is displayed in response to an interactive operation on a user interface, wherein the user interface is configured to display a first media content in a feed.

For example, the first media content comprises a video (for example, a short video). Of course, the scope of the present disclosure is not limited to this. For example, the first media content may also comprise other types of media contents.

The media content collection comprises one or more second media contents. For example, the second media content is video or audio. For example, the media content collection comprises a video collection. Of course, the scope of the present disclosure is not limited to this. For example, the media content collection may also comprise other types of media content collections, for example, an audio collection.

For another example, the first media content is free media content, and the media content collection is the media content collection required to be exchanged using an exchange resource (for example, the media content collection required be paid).

In some embodiments, the first media content is different from the one or more second media contents in the media content collection. That is, the media content collection may not comprise the first media content. For example, when the user browses the first media content during the process of browsing the feed, it is possible to access the media content collection based on the recommendation of the first media content.

In other embodiments, the first media content is the same as one second media content in the media content collection. That is, the first media content is a certain second media content in the media content collection. In this way, when the user browses the first media content during the process of browsing the feed, it is possible to roughly know the related content of the media content collection by previewing a certain media content in advance.

In some embodiments, the step S102 comprises: displaying the media content collection to be unlocked in response to an interactive operation on a link control in the user interface, wherein the link control corresponds to the media content collection. That is, in this embodiment, the media content collection to be unlocked is displayed through the interactive operation on the link control in the user interface.

In other embodiments, the step S102 comprises: displaying a creator home page in response to an interactive operation on a control of the creator home page in the user interface, wherein the creator home page comprises a first collection control; and displaying the media content collection to be unlocked in response to an interactive operation on the first collection control. That is, in this embodiment, the display of the media content collection to be unlocked is achieved by way of the creator home page.

At step S104, the media content collection unlocked is displayed in response to an unlocking operation for an access right to the media content collection to be unlocked.

In some embodiments, the step S104 comprises: displaying the media content collection unlocked in response to unlocking the access right to the media content collection to be unlocked using an exchange resource. For example, the exchange resource is an exchange item.

That is, in the embodiment, the access right of the media content collection can be unlocked by exchanging the access right using the exchange resource, so as to display the media content collection unlocked. In this way, the user can browse the media content collection unlocked.

For example, the unlocking of the access right of the media content collection using the exchange resource may be realized by payment. Of course, the scope of the present disclosure is not limited to this, and the access right of the media content collection may also be unlocked by other exchange items (for example, reward points of a user).

So far, a method for accessing media content according to some embodiments of the present disclosure is provided. The method comprises: displaying a media content collection to be unlocked in response to an interactive operation on a user interface, wherein the user interface is configured to display a first media content in a feed; and displaying the media content collection unlocked in response to an unlocking operation for an access right to the media content collection to be unlocked. In the method, the user may access the media content collection unlocked (for example, viewing a video) by an unlocking operation on the media content collection to be unlocked. In this way, the method achieves the access to the media content collection, which improves the user experience.

The method according to the embodiments of the present disclosure will be described below in conjunction with the user interface respectively. Here, the user interface is an interactive interface, that is, an interface that the current user can interact with.

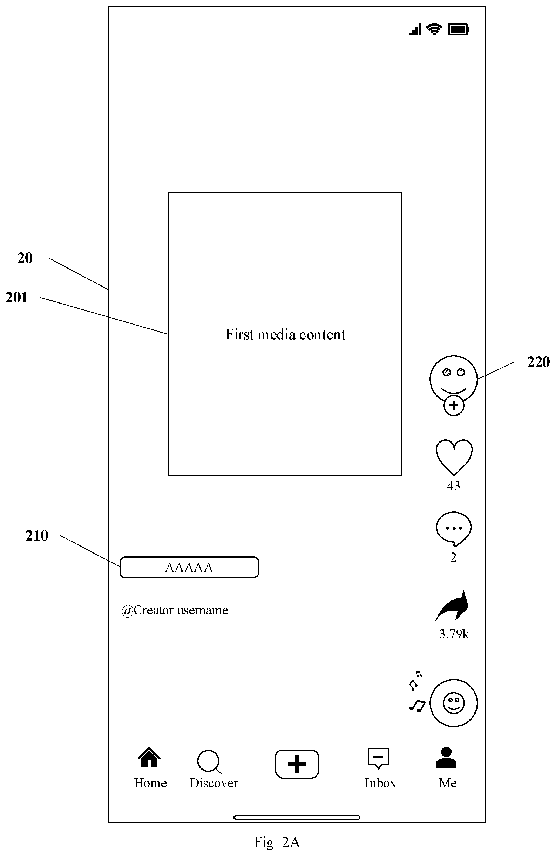

Figs. 2A to 2D are schematic views schematically showing several user interfaces during a process of accessing media content according to some embodiments of the present disclosure. A process of viewing the media content collection using a link control in the user interface will be described, and a subsequent process of unlocking the media content collection will be described in conjunction with Figs. 2A to 2D.

First, as shown in Fig. 2A, a user interface (also referred to as a first user interface) 20 is displayed, wherein the user interface comprises a first media content 201, a link control 210, and a control 220 of the creator home page. For example, the first media content is a short video. During a process of browsing the feed, a user browses to the first media content 201 and the link control 210. A title of a pointed media content collection is displayed on the link control, for example the title name "AAAAA" shown in Fig. 2A.

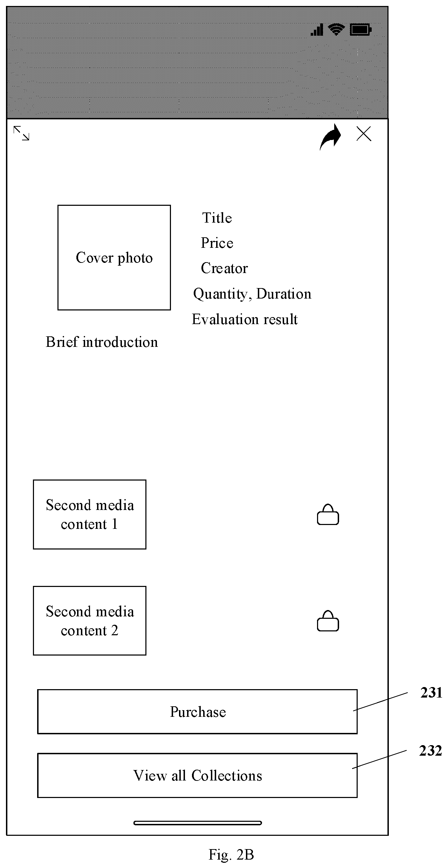

Next, a media content collection to be unlocked is displayed in response to an interactive operation (for example, a trigger operation) on the link control 210 in the user interface 20. For example, the interactive operation comprises operations such as clicking or long press. For example, a user interface (also referred to as a second user interface) as shown in Fig. 2B is displayed after the user clicks the link control 210. As shown in Fig. 2B, the second user interface comprises one or more second media contents of the media content collection to be unlocked. In addition, the second user interface also displays a cover photo (i.e. the cover of the media content collection), title, price, creator, quantity of the second media content, duration and evaluation result (e.g. ranking and/or grade , etc) of the media content collection, etc. Here, the creator is a publisher who publishes the first media content and the media content collection.

Furthermore, as shown in Fig. 2B, the second user interface further comprises an unlocking control. For example, the unlocking control is a purchase control 231. As shown in Fig. 2B, the second user interface also comprises a viewing-all-collections control 232. All the media content collections can be viewed in response to an interactive operation (for example, a trigger operation such as a click operation or the like) on the viewing-all-collections control 232.

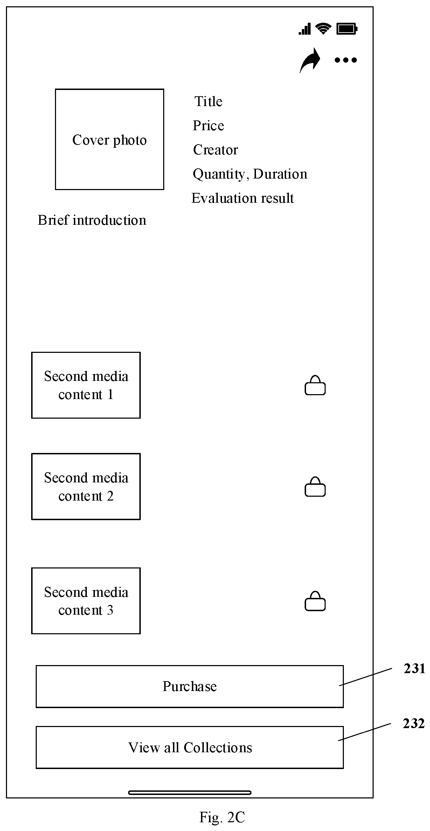

After the second user interface is scrolled up, a user interface shown in Fig. 2C is obtained, so that more second media contents can be browsed. All the second media contents of the media content collection can be displayed in the form of a media content list (for example, a video list).

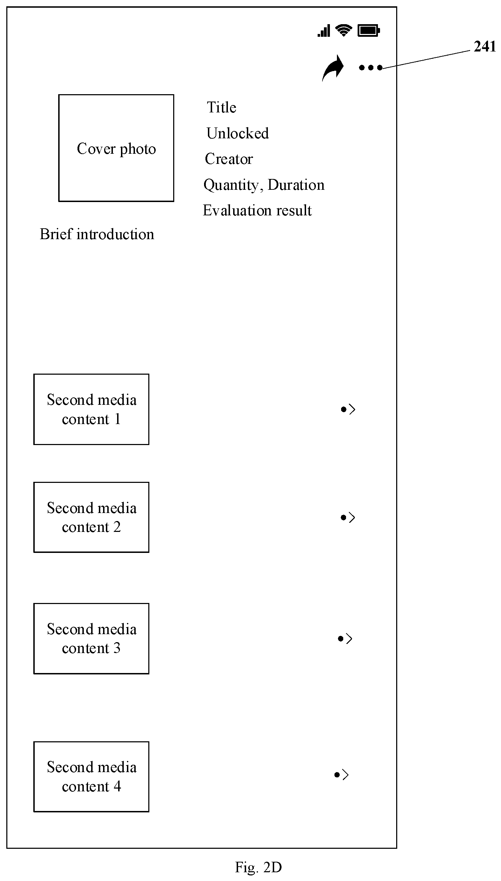

Next, the media content collection is unlocked in response to an interactive operation (for example, a trigger operation such as a click operation or the like) on the unlocking control. For example, by clicking the purchase control 231, the media content collection unlocked is obtained by payment, as shown in Fig. 2D. At this time, the media content collection is unlocked.

So far, the process of looking up the media content collection using the link control in the user interface has been described, and the process of unlocking the media content collection has been described. In the embodiment, the media content collection to be unlocked is conveniently viewed by the link control, and the media content collection is conveniently unlocked by the unlocking control, which improves the user experience.

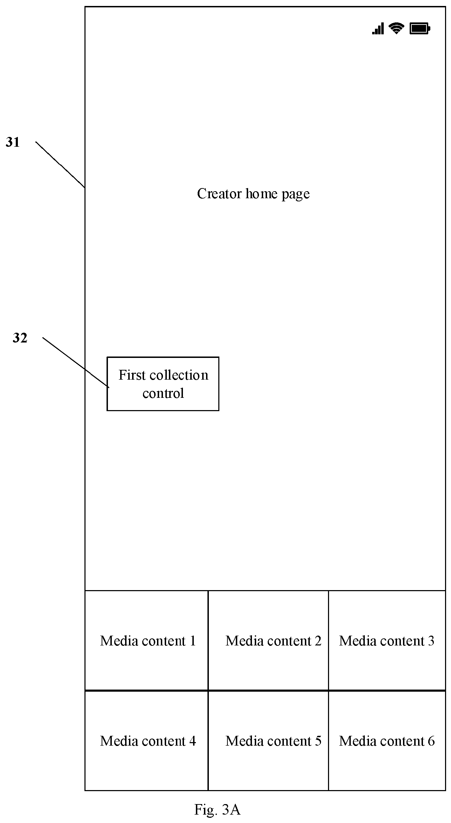

Figs. 3A to 3B are schematic views schematically showing several user interfaces during a process of accessing media content according to other embodiments of the present disclosure. A process of viewing the media content collection using a control of the creator home page and a first collection control will be described, and a subsequent process of unlocking the media content collection will be described in conjunction with Fig. 2A, Figs. 3A to 3B, 2C and Figs. 2D.

First, as shown in Fig. 2A, a creator home page is displayed in response to an interactive operation on the control 220 of the creator home page in the user interface 20.

For example, when a user clicks the control 220 of the creator home page, a creator home page 31 shown in Fig. 3A is displayed. The creator home page comprises a first collection control 32. In addition, the creator home page also comprises another media content list.

Next, a media content collection to be unlocked is displayed in response to an interactive operation (for example, a trigger operation such as a click operation or the like) on the first collection control 32.

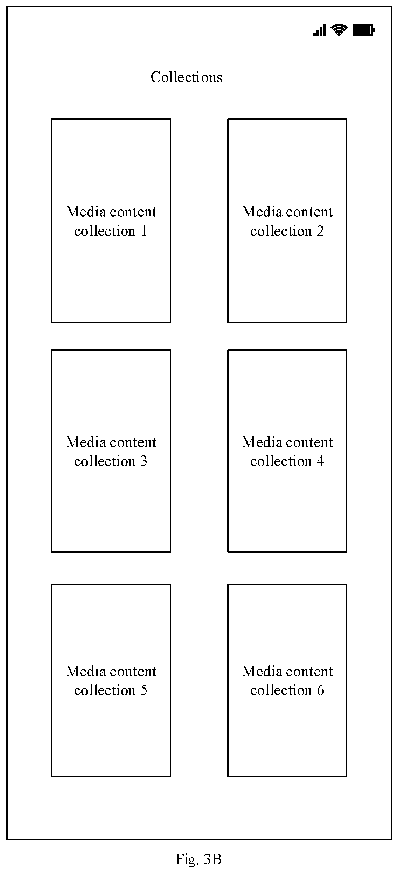

For example, when the user clicks the first collection control 32, a plurality of media content collections to be unlocked are displayed, as shown in Fig. 3B. Then, in response to an interactive operation (for example, a click operation or the like) on one of the plurality of media content collections to be unlocked, a list of the second media content of the media content collection is displayed, as shown in Fig. 2C.

Next, similarly as above, the media content collection is unlocked in response to the interactive operation (for example, a trigger operation such as a click operation or the like) on the unlocking control. For example, by clicking the purchase control 231, the media content collection unlocked is obtained by payment, as shown in Fig. 2D. At this time, the media content collection is unlocked.

So far, the process of viewing the media content collection using the control of the creator home page and the first collection control has been described, and the process of unlocking the media content collection has been described. In the embodiment, the media content collection to be unlocked is conveniently viewed by the control of the creator home page and the first collection control, and the media content collection is conveniently unlocked by the unlocking control, which improves the user experience.

In some embodiments, one or more second media contents of the media content collection comprise at least one free preview media content. For example, a certain second media content serves as the preview media content to facilitate free preview of the second media content by the user, so that the user can be more aware of whether there is a need to unlock the media content collection. For example, the preview media content is specified by a play button, and the preview media content is set at a top of the list of the second media content.

In some embodiments, the link control further corresponds to another function control. That is, the linked control can also point to another function control.

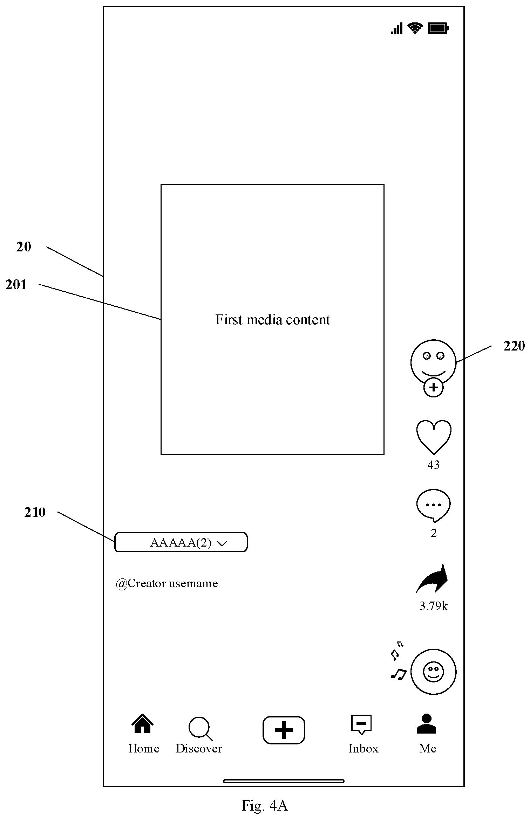

Figs. 4A to 4B are schematic views schematically showing several user interfaces during a process of accessing media content according to other embodiments of the present disclosure.

As shown in Fig. 4A, a number (for example, 2) is displayed after the title of the link control 210, wherein the number indicates the number of linked contents to which the link control 210 points. For example, if the link control 210 only points to one media content collection, a number may not be displayed after the title of the link control 210; if the link control 210 points to another function control in addition to one media content collection, a corresponding number may be displayed after the title of the link control 210. For example, as shown in Fig. 4A, the number 2 is displayed after the title of the link control 210, which indicates that the link control 210 points to another function control in addition to one media content collection.

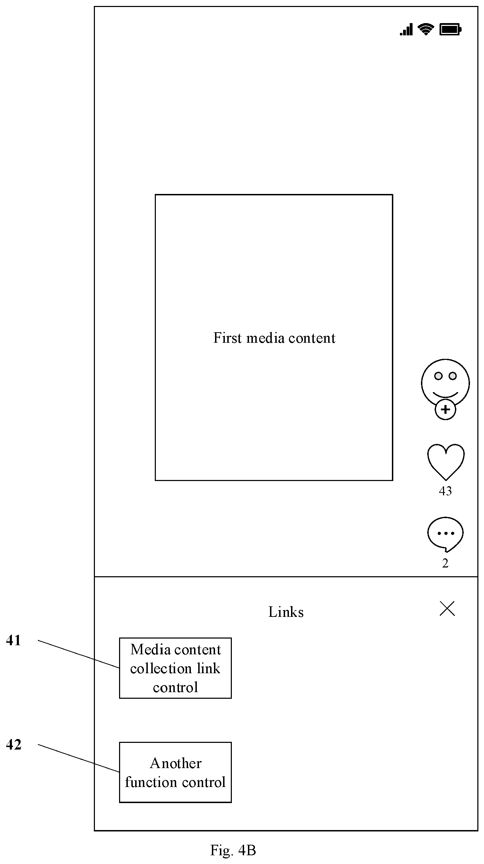

The link content to which the link control 210 points is displayed in response to an interactive operation (for example, a trigger operation such as a click operation or the like) on the link control 210. For example, the link control 210 is clicked to enter a user interface as shown in Fig. 4B, wherein the user interface displays two link contents, that is, a media content collection link control 41 and another function control 42. For example, the another function control is a green screen function control.

Then, if the media content collection link control 41 is clicked, the list of the second media content of the corresponding media content collection is displayed, for example, as shown in Fig. 2C.

In the above-described embodiment, the link control points to another function control in addition to the media content collection, which makes it more convenient for the user to perform other functional operations, thereby improving the user experience.

In some embodiments, the method further comprises: maintaining an access right to the media content collection unlocked for a user corresponding to the media content collection unlocked in response to the link control being removed. That is, after the user unlocks a certain media content collection, if the creator removes the link control, the user will still maintain the access right to the media content collection, that is, it is still possible to view the media content collection. In this way, after the link control is removed, the access to the media content collection for the user who has unlocked the media content collection is not affected.

In other embodiments, if a certain or certain second media contents in the media content collection are removed, the user who has unlocked the media content collection will be notified, and a corresponding exchange resource will be returned to the user. For example, refund is performed for the user.

After the user unlocks the media content collection, the user can browse the media content collection. Next, different processes of browsing the media content collection will be explained in detail in conjunction with the accompanying drawings.

In some embodiments, the method further comprises: displaying a second collection control in response to an interactive operation on a setting option control in a user home page; and displaying the media content collection unlocked in response to an interactive operation on the second collection control.

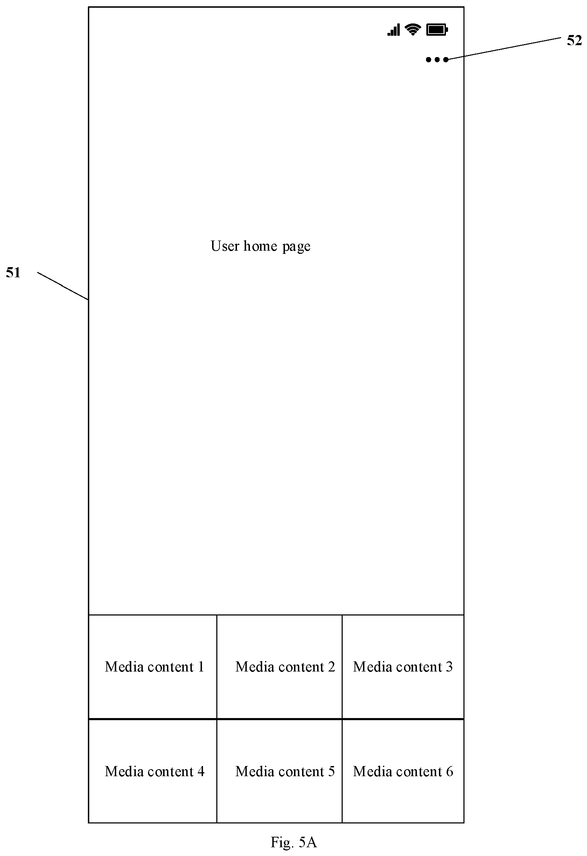

Figs. 5A to 5C are schematic views schematically showing several user interfaces during a process of accessing a media content collection unlocked according to some embodiments of the present disclosure. A process of displaying the media content collection unlocked will be described in conjunction with Figs. 5A to 5C and Fig. 2D.

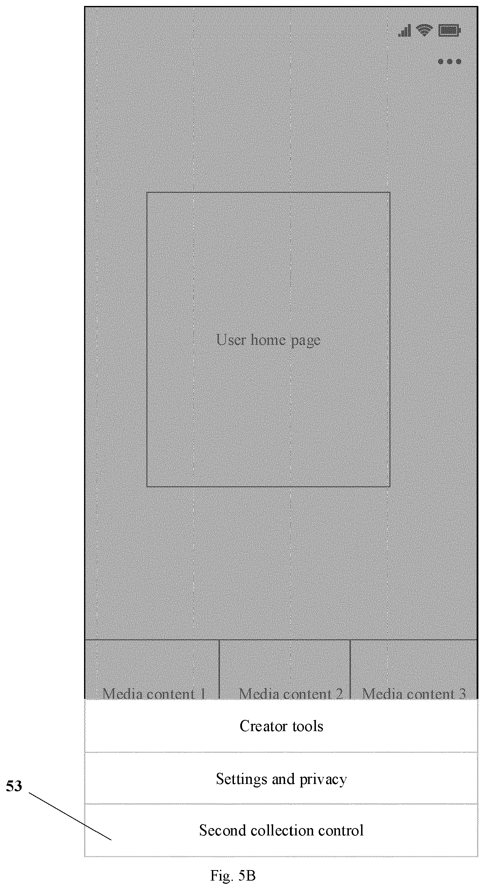

First, a second collection control 53 is displayed in response to an interactive operation (for example, a trigger operation such as a click operation or the like) on a setting option control (which may be referred to as a first setting option control) 52 in the user home page (i.e., a personal home page of the current user) 51. For example, the setting option control 52 is displayed in a form of an ellipsis. For example, a user interface shown in Fig. 5B is displayed by clicking the setting option control 52 in the user home page 51, the user interface comprising a second collection control 53. In addition, the user interface also displays other controls, for example a creator tool control, and a settings and privacy control.

Next, the media content collection unlocked is displayed in response to an interactive operation (for example, a trigger operation such as a click operation or the like) on the second collection control 53.

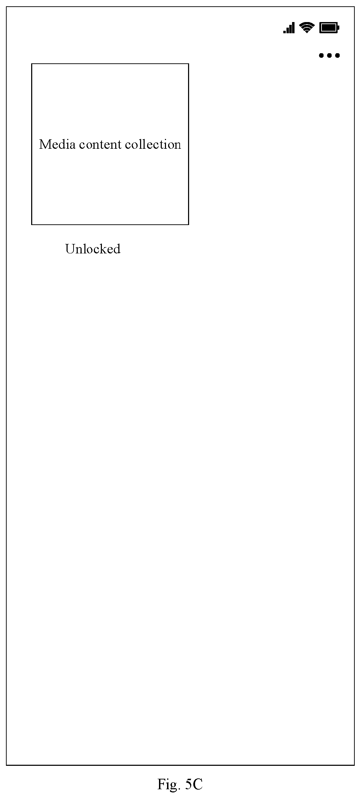

For example, a user interface shown in Fig. 5C is displayed by clicking the second collection control 53, the user interface comprising the media content collection unlocked; and the media content collection unlocked is then clicked to enter the user interface as shown in Fig. 2D, so as to display the media content collection unlocked, for example the list of the second media content of the media content collection.

The above-described embodiment describes the process of entering from the user home page to display the media content collection unlocked, which is convenient for the user to browse the media content collection unlocked.

In other embodiments, the method further comprises: displaying an unlocking message, the unlocking message comprising information on the media content collection unlocked; and displaying the media content collection unlocked in response to an interactive operation on the unlocking message.

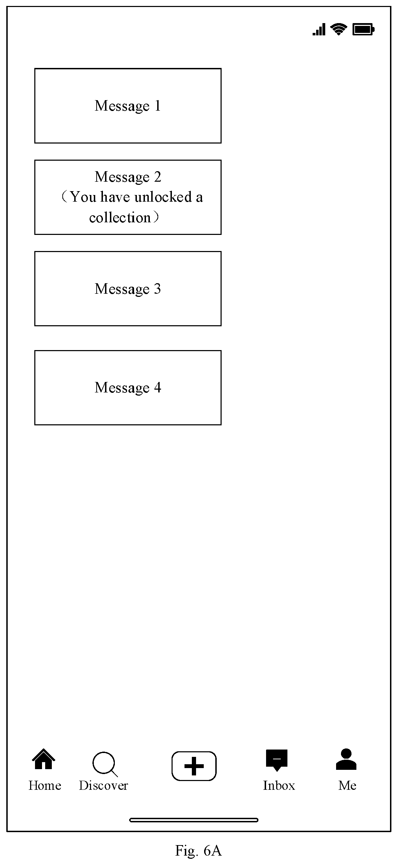

Figs. 6A to 6B are schematic views schematically showing several user interfaces during a process of accessing a media content collection unlocked according to other embodiments of the present disclosure. A process of displaying the media content collection unlocked will be described in conjunction with Figs. 6A to 6B and Fig. 2D.

For example, as shown in Fig. 6A, one or more messages are displayed in response to an interactive operation (for example, a trigger operation such as a click operation or the like) on an inbox control. The one or more messages comprise an unlocking message (for example, a message 2), the unlocking message comprising information on the media content collection unlocked.

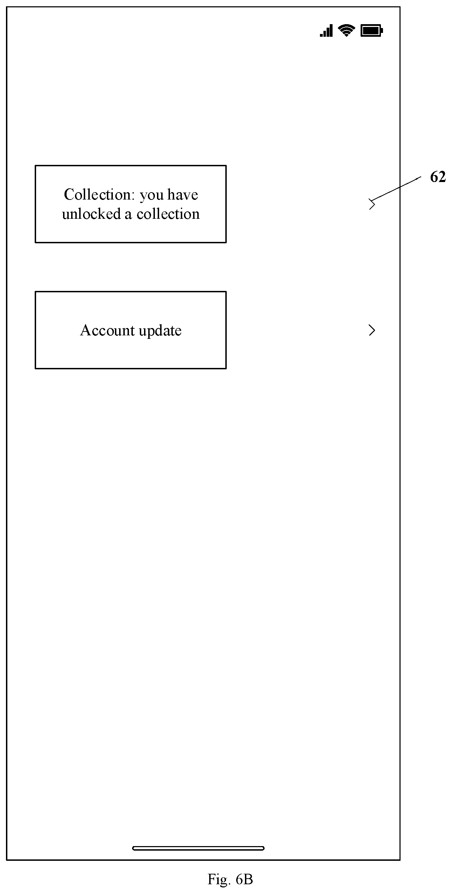

Next, the media content collection unlocked is display in response to an interactive operation (for example, a trigger operation such as a click operation or the like) on the unlocking message. For example, by clicking the message 2, a user interface as shown in Fig. 6B is displayed, the user interface comprising a message of unlocking the collection. A page shift control 62 is displayed behind the message of unlocking the collection.

Next, in response to an interactive operation (for example, a trigger operation such as a click operation or the like) on the page shift control 62, the user interface shown in Fig. 2D can be accessed to display the media content collection unlocked, for example the list of the second media content of the media content collection.

The above-described embodiment describes the process of entering from the message of the user's inbox to display the media content collection unlocked, which is convenient for the user to browse the media content collection unlocked.

In other embodiments, the method further comprises: displaying the media content collection unlocked in response to an interactive operation on a first collection control in a creator home page.

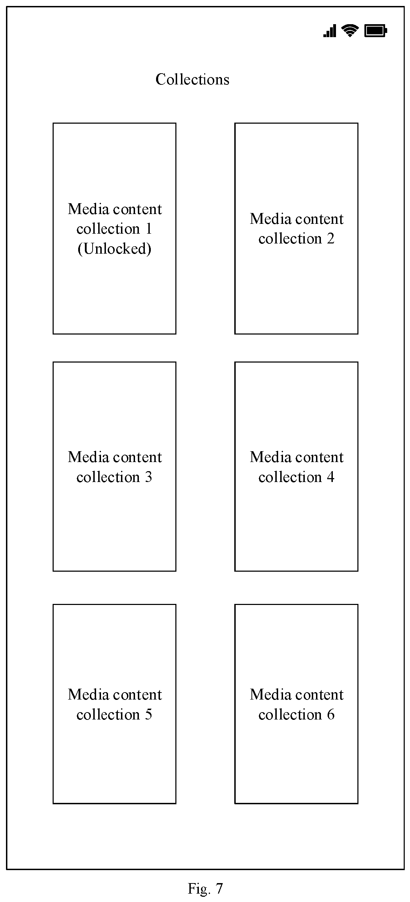

Fig. 7 is a schematic view schematically showing a user interface during a process of accessing a media content collection unlocked according to other embodiments of the present disclosure. A process of displaying the media content collection unlocked will be described in conjunction with Figs. 3A, 7 and Fig. 2D.

As described above, the creator home page 31 shown in Fig. 3A comprises the first collection control 32. After the media content collection is unlocked (for example, purchased), in response to an interactive operation (for example, a trigger operation such as a click operation or the like) on the first collection control 32 in the creator home page 31, a plurality of media content collections as shown in Fig. 7 are displayed, the plurality of media content collections comprising the media content collection unlocked 1. Then, in response to an interactive operation (for example, a trigger operation such as a click operation or the like) on the media content collection unlocked 1, the user interface as shown in Fig. 2D can be accessed to display the media content collection unlocked, for example the list of the second media content of the media content collection.

The above-described embodiment describes the process of entering from the creator home page to display the media content collection unlocked, which is convenient for the user to browse the media content collection unlocked.

In some embodiments, the method further comprises: displaying an evaluation result of a user on the media content collection.

For example, after browsing the media content collection, the user may evaluate the media content collection, for example by ranking or rating, and then the user interface may display an evaluation result of the media content collection, for example by ranking and/or rating.

In some embodiments, the displaying of the evaluation result of the user on the media content collection comprises: displaying an evaluation window in response to an interactive operation on an evaluation control on a page on which the media content collection is located; and displaying the evaluation result of the user on the media content collection in response to an evaluation operation of the user on the media content collection on the evaluation window.

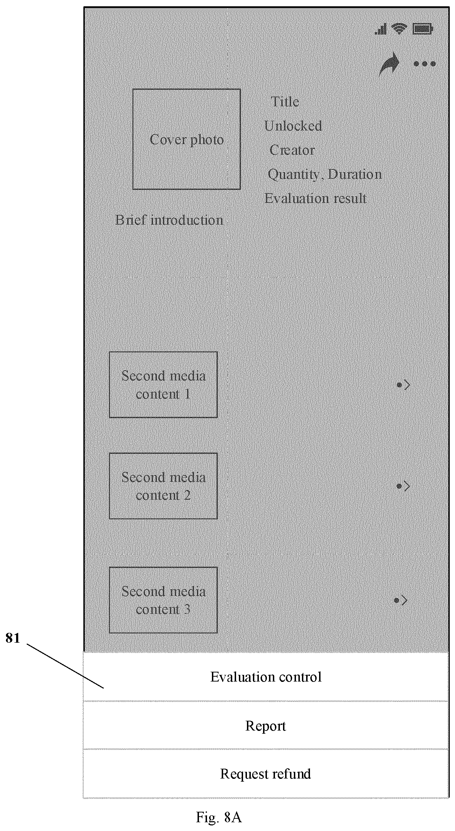

Figs. 8A to 8C are schematic views schematically showing several user interfaces during a process of evaluating an media content collection according to some embodiments of the present disclosure. A process of evaluating the media content collection will be described in conjunction with Fig. 2D and Figs. 8A to 8C.

As shown in Fig. 2D, the user interface comprises a second setting option control 241. a user interface as shown in Fig. 8A is displayed in response to an interactive operation (for example, a trigger operation such as a click operation or the like) on the second setting option control 241, the user interface being provided with a plurality of option controls, for example an evaluation control 81 and another control. For example, the other control comprises a report control and/or a refund request control.

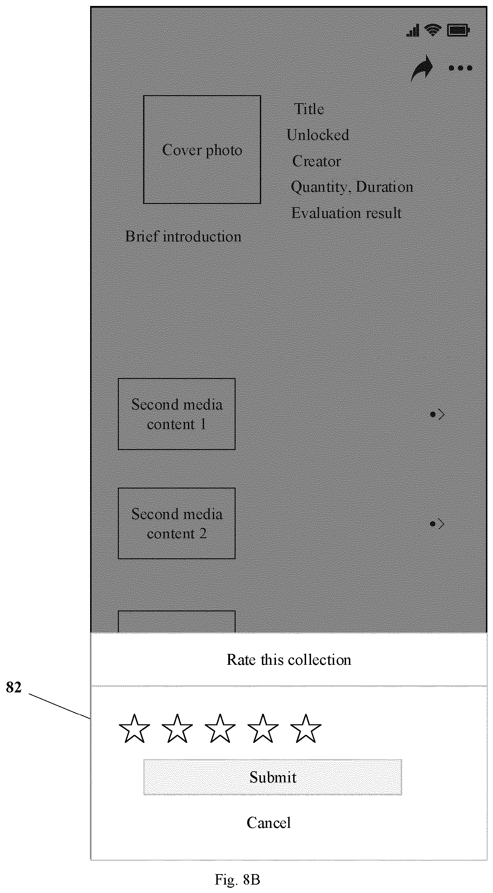

Next, an evaluation window 82 is displayed in response to an interactive operation (for example, a trigger operation such as a click operation or the like) on the evaluation control 81, as shown in Fig. 8B. For example, the evaluation window comprises a ranking to be evaluated, a submit control and a cancel control.

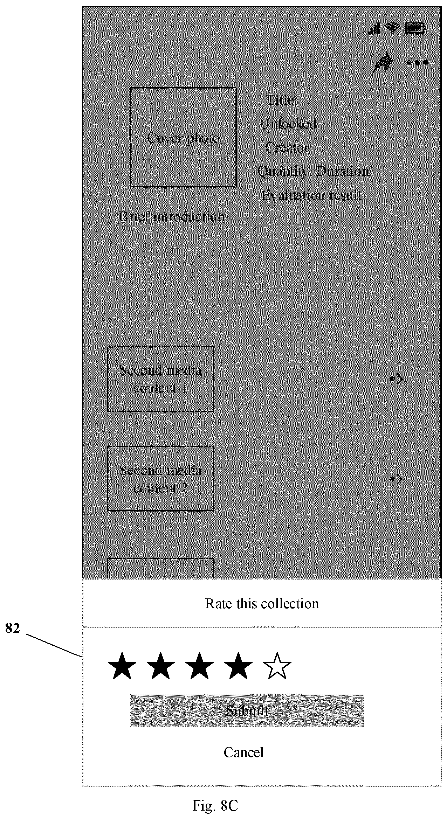

Next, an evaluation result of the user on the media content collection is displayed in response to an evaluation operation of the user on the media content collection on the evaluation window. For example, as shown in Fig. 8C, the user selects four stars when evaluating the rating, and then clicks the submit control to implement the evaluation operation on the media content collection. Then, the user interface is shifted to the interface shown in Fig. 2D, so that the evaluation result can be displayed.

The above-described embodiment describes a method for evaluating media content collection. The method may make it convenient for the user to evaluate the media content collection at any time, thereby improving the user experience.

In other embodiments, the displaying of the evaluation result of the user on the media content collection comprises: displaying an evaluation window in response to at least a portion of media content in the media content collection being played; and displaying the evaluation result of the user on the media content collection in response to an evaluation operation of the user on the media content collection on the evaluation window.

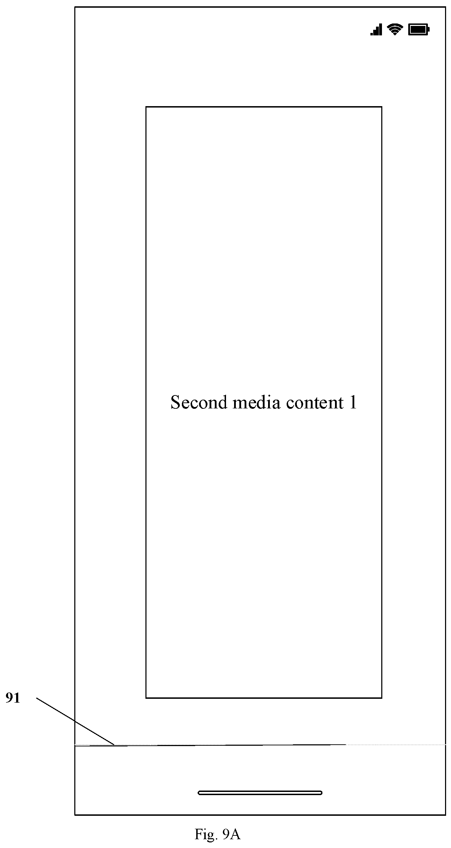

Figs. 9A to 9C are schematic views schematically showing several user interfaces during a process of evaluating a media content collection according to other embodiments of the present disclosure. A process of evaluating the media content collection according to other embodiments of the present disclosure will be explained in detail in conjunction with FIGS. 9A to 9C.

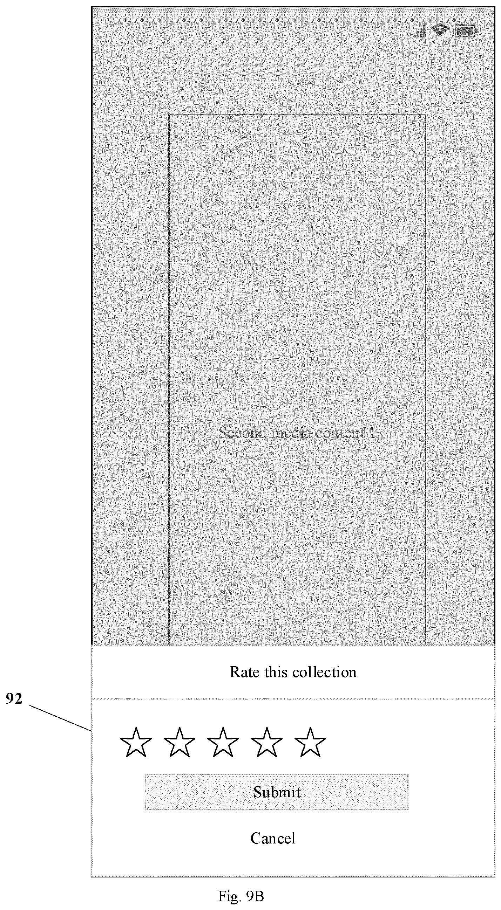

For example, as shown in Fig. 9A, the current user interface is playing a certain second media content 1 in the media content collection. A portion of the second media content 1 is played, for example, a corresponding progress bar 91 reaches a predetermined proportion (for example, 70%) of the second media content. In this case, an evaluation window 92 can be displayed as shown in Fig. 9B.

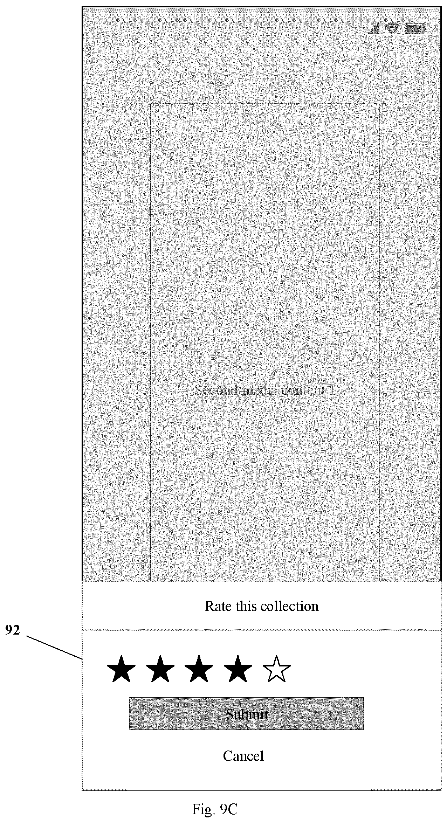

Next, an evaluation result of the user on the media content collection is displayed in response to an evaluation operation of the user on the media content collection on the evaluation window 92. For example, as shown in Fig. 9C, the user selects four stars when evaluating the rating, and then clicks the submit control to implement the evaluation operation on the media content collection. Then, a remaining portion of the second media content 1 is continued to be played.

The above-described embodiment describes another method for evaluating the media content collection. The method can make it convenient for the user to evaluate the media content collection in time during the process of playing the media content, which improves the user experience.

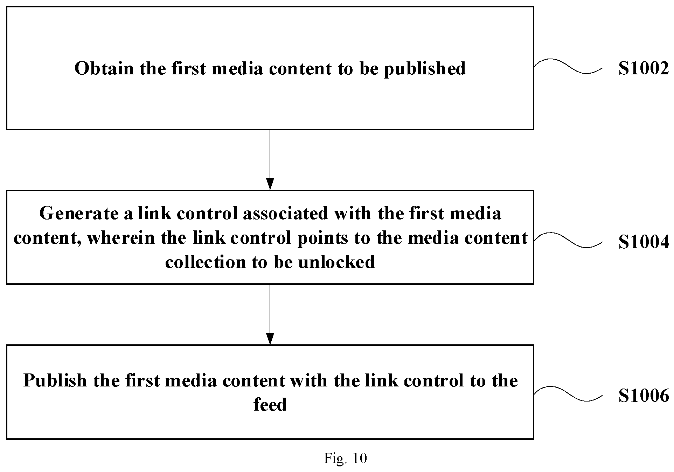

Fig. 10 is a flowchart showing a method for publishing media content according to some embodiments of the present disclosure. As shown in Fig. 10, the method for publishing media content comprises steps S1002 to S1006.

At step S1002, a first media content to be published is obtained.

At step S1004, a link control associated with the first media content is generated, wherein the link control points to the media content collection to be unlocked.

At step S1006, the first media content with the link control is published to the feed.

So far, the method for publishing media content according to some embodiments of the present disclosure has been provided. The above-described method achieves the object of publishing the first media content with the link control by the creator, which makes it convenient for other users to view the media content collection to be unlocked by the link control when browsing the first media content.

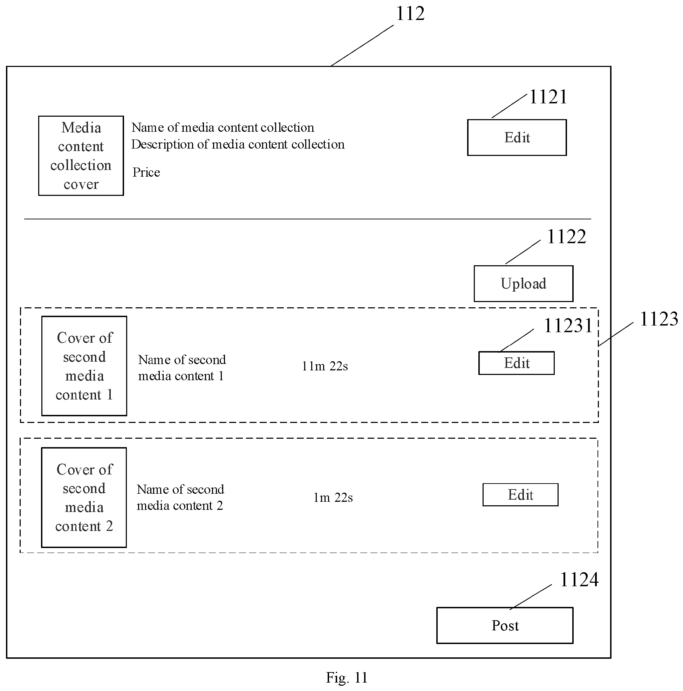

Fig. 11 is a web page view schematically showing that a media content collection is uploaded to a web page according to some embodiments of the present disclosure.

As shown in Fig. 11, a publishing interface 112 for the media content collection comprises an input first attribute information such as the cover, title (i.e., name), description and price of the media content collection. The first attribute information can be further edited by an edit control 1121. The publishing interface 112 also comprises an uploading interface for the second media content, which comprises an upload control 1122 and a first entry component 1123 of an uploaded second media content.

The second media content uploaded by the user is obtained in response to triggering the upload control 1122 by the user. The user may select the second media content to be uploaded from local or network. The present disclosure does not limit an uploading method of the user, for example, the uploading may also be completed by dragging the second media content to be uploaded to a designated area of the uploading interface.

The first entry component 1123 comprises a second attribute information such as the cover and duration of the second media content, and may also comprise an edit control 11231. In some embodiments, the second attribute information set by the user for a corresponding second media content is obtained in response to triggering the edit control by the user.

After the user finishes uploading and setting the attribute information, a publishing control 1124 can be triggered to upload and publish the media content collection on the web page.

In some embodiments, before publishing the media content collection, a real-time preview interface for the media content collection is displayed. Therefore, the creator may more visually see the interface after publishing the media content collection, thereby facilitating to adjust the content to be published, and saving the operation and interaction times of the creator, so that the network resources and the computing resources can be saved.

In some embodiments, the preview interface is a preview of the display interface of the media content collection after a viewer of the first media content (i.e., the user browsing the first media content) performs interactive operation on the user interface (for example, the link control in the user interface). For example, after the viewer performs operation of clicking the link, information of the media content collection is displayed. Therefore, the creator can adjust the media content collection more accurately from the perspective of the viewer.

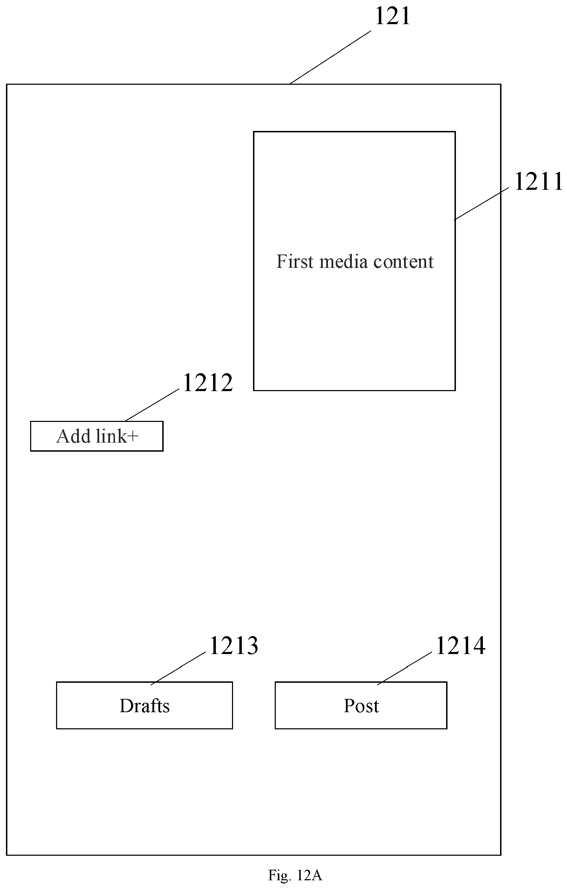

Figs. 12A to 12C are schematic views schematically showing several publishing interfaces during a process of publishing media content according to some embodiments of the present disclosure. Figs. 12A to 12C exemplarily show the process of generating a link.

Fig. 12A exemplarily shows a schematic view of a publishing interface of a first media content. In Fig. 12A, a publishing interface 121 is provided with a plurality of controls, which comprise, for example, a first media content control 1211, an add-link control 1212, a save-as-draft control 1213, and a publishing control 1214.

The first media content control 1211 exhibits the information of the first media content uploaded by the user, for example the cover.

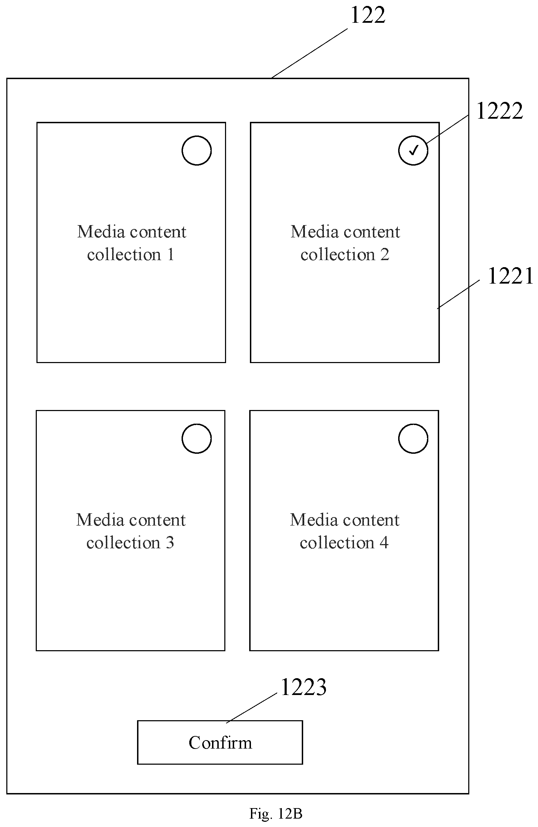

The add-link control 1212 is configured to trigger a process of adding a link associated with the first media content. Fig. 12B exemplarily shows a media content collection selecting interface after the link control is triggered.

In some embodiments, one or more media content collections of the user are displayed in response to triggering the add-link control 1212 in the publishing interface 121 by the user. For example, the media content collection controls corresponding to the media content collections 1~4 are displayed by a media content collection selecting interface 122. Each media content collection has a selecting control. Taking the media content collection 2 as an example, the media content collection control 1221 displays the information of the media content collection 2 published by the user, comprising information such as the cover, title, price, duration and ranking. The upper layer of the media content collection control 1221 is provided with a selecting control 1222, which is configured to indicate whether the user has selected a corresponding media content collection. Fig. 12B exemplarily shows that when the media content collection 2 is selected, there is a checked icon in the selecting control 1222, while there is no checked icon in the selecting controls corresponding to other unselected media content collections.

The media content collection selected by the user is obtained in response to triggering a selection confirm control by the user. For example, when the user triggers a confirm control 1223, it is confirmed that the media content collection 2 is selected. A text in the selection confirm control may be set as required, for example "confirm" , "add to the first media content", etc.

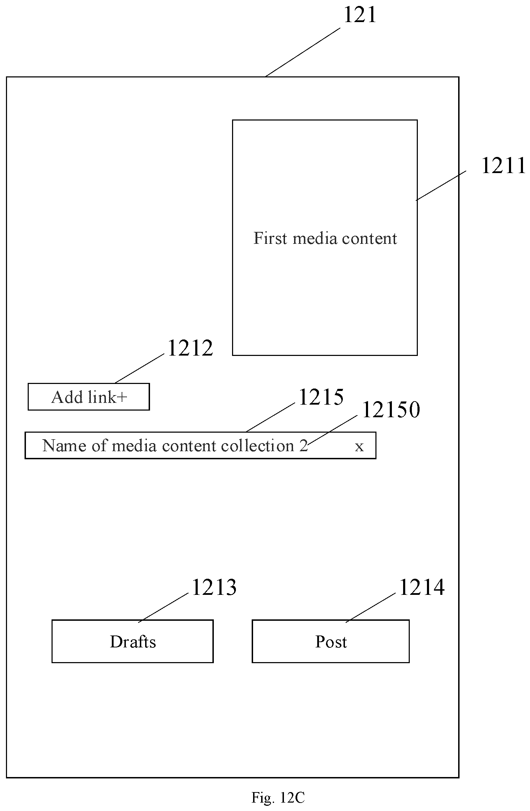

After that, it is possible to skip back to the publishing interface 121. Fig. 12C exemplarily shows a schematic view of a publishing interface of the first media content to which a link has been added. Compared with Fig. 12A, a link control 1215 is newly added in the publishing interface 121, as shown in Fig. 12C.

In some embodiments, the link control comprises part or all of a name of the media content collection selected by the user. For example, when a length of the name is greater than a preset length, the name may be truncated.

In some embodiments, the link (i.e., the link control) is removed in response to performing a preset delete operation on the link control. For example, the link control 1215 is removed in response to clicking a delete sub control 12150 in the link control 1215. The publishing interface 121 after removing the link control is shown in Fig. 12A.

After the user confirms the added link and other publishing settings (not shown) of the first media content, in the publishing interface 121 shown in Fig. 12C, the user may trigger the publishing control 1214 to publish the first media content with the link control into the feed. If the user triggers the publishing control 1214 in the publishing interface 121 shown in Fig. 12A, the first media content not with the link control is published into the feed.

If the user is not intended to publish the first media content temporarily, it is possible to trigger the save-as-draft control 1213, so that the added and set information in the publishing interface 121 may be temporarily saved.

The above-described embodiment realizes the publishing operation on the first media content, which is convenient for other users to view the media content collection to be unlocked by the link control when browsing the first media content.

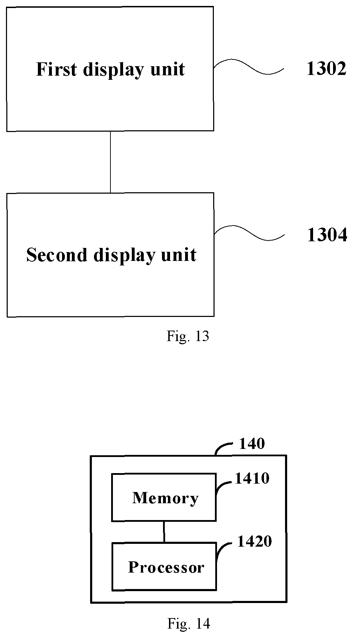

Fig. 13 is a block view schematically showing a structure of a device for accessing media content according to an embodiment of the present disclosure. As shown in Fig. 13, the device comprises a first display unit 1302 and a second display unit 1304.

The first display unit 1302 is configured to display a media content collection to be unlocked in response to an interactive operation on a user interface, wherein the user interface is configured to display a first media content in a feed.

The second display unit 1304 is configured to display the media content collection unlocked in response to an unlocking operation for an access right to the media content collection to be unlocked.

In the device, the user can access the media content collection unlocked by an unlocking operation on the media content collection to be unlocked. In this way, the device achieves the access to the media content collection, which improves the user experience.

In some embodiments, the first display unit 1302 is configured to display the media content collection to be unlocked in response to an interactive operation on a link control in the user interface, wherein the link control corresponds to the media content collection.

In other embodiments, the first display unit 1302 is configured to display a creator home page in response to an interactive operation on a control of the creator home page in the user interface, wherein the creator home page comprises a first collection control, and display the media content collection to be unlocked in response to an interactive operation on the first collection control.

In some embodiments, the second display unit 1304 is configured to display the media content collection unlocked in response to unlocking the access right to the media content collection to be unlocked using an exchange resource.

In some embodiments, the above-described device further comprises a third display unit. The third display unit is configured to display a second collection control in response to an interactive operation on a setting option control in a user home page, and display the media content collection unlocked in response to an interactive operation on the second collection control.

In some embodiments, the above-described device further comprises a fourth display unit. The fourth display unit is configured to display an unlocking message, the unlocking message comprising information on the media content collection unlocked, and display the media content collection unlocked in response to an interactive operation on the unlocking message.

In some embodiments, the first display unit 1302 is further configured to display the media content collection unlocked in response to an interactive operation on a first collection control in a creator home page.

In some embodiments, the above-described device further comprises a right maintaining unit. The right maintaining unit is configured to maintain an access right to the media content collection unlocked for a user corresponding to the media content collection unlocked in response to the link control being removed.

In some embodiments, the above-described device further comprises a fifth display unit. The fifth display unit is configured to display an evaluation result of a user on the media content collection.

In some embodiments, the fifth display unit is configured to display an evaluation window in response to an interactive operation on an evaluation control on a page on which the media content collection is located, and display the evaluation result of the user on the media content collection in response to an evaluation operation of the user on the media content collection on the evaluation window.

In some embodiments, the fifth display unit is configured to display an evaluation window in response to at least a portion of media content in the media content collection being played, and display the evaluation result of the user on the media content collection in response to an evaluation operation of the user on the media content collection on the evaluation window.

In some embodiments, the above-described device further comprises an obtaining unit, a generating unit and a publishing unit. The obtaining unit is configured to obtain the first media content to be published. The generating unit is configured to generate a link control associated with the first media content, wherein the link control points to the media content collection to be unlocked. The publishing unit is configured to publish the first media content with the link control to the feed.

It should be noted that, the above-described units are only logical modules divided according to the specific functions realized by the same, but not intended to limit specific implementations. For example, it is possible to be implemented in the form of software, hardware, or a combination of software and hardware. In actual implementation, each of the above-described units may be implemented as an independent physical entity, or may also be implemented by a single entity (for example, a processor (CPU or DSP, or the like), an integrated circuit, or the like). In addition, the operations/functions implemented by the above-described units may be implemented by the processing circuit itself.

In addition, although not shown, the device may also comprise a memory, which may store various information generated by the device and various units comprised in the device during operation, programs and data for operation, data to be sent by the communication unit, and the like. The memory may be a volatile memory and/or a non-volatile memory. For example, the memory may comprise, but is not limited to, a random access memory (RAM), a dynamic random access memory (DRAM), a static random access memory (SRAM), a read only memory (ROM), or a flash memory. Of course, the memory may also be located outside the device. Alternatively, although not shown, the device may also comprise a communication unit, which may be used to communicate with other devices. In one example, the communication unit may be implemented in an appropriate manner known in the art, for example, comprising communication components such as antenna arrays and/or radio frequency links, various types of interfaces, communication units, and the like, which will not be described in detail here. In addition, the device may also comprise other components not shown, for example a radio frequency link, a baseband processing unit, a network interface, a processor, a controller, and the like, which will not be described in detail here.

In some embodiments of the present disclosure, an electronic device is also provided. Fig. 14 shows a block view of an electronic device according to some embodiments of the present disclosure. For example, in some embodiments, the electronic device 140 which may be various types of devices, for example may comprise, but is not limited to a mobile terminal such as a mobile phone, a notebook computer, a digital broadcast receiver, a PDA (personal digital assistant), a PAD (tablet computer), a PMP (Portable Multimedia Player) or an in-vehicle terminal (for example, an in-vehicle navigation terminal); and a fixed terminal such as a digital TV, a desktop computer and the like. For example, the electronic device 140 may comprise a display panel for displaying data and/or execution results used in the solution according to the present disclosure. For example, the display panel may have various shapes, for example a rectangular panel, an oval panel, a polygonal panel, or the like. In addition, the display panel may be not only a flat panel, but also a curved panel, or even a spherical panel.

As shown in Fig. 14, the electronic device 140 of the embodiment comprises: a memory 1410, and a processor 1420 coupled to the memory 1410. It should be noted that the components of the electronic device 140 shown in Fig. 14 are only exemplary, but not restrictive. According to actual application requirements, the electronic device 140 may also have other components. The processor 1420 may control other components in the electronic device 140 to perform desired functions.

In some embodiments, the memory 1410 is configured to store one or more computer-readable instructions. When the processor 1420 is configured to run computer-readable instructions, the computer-readable instructions are executed by the processor 1420 to implement the method according to any of the above-described embodiments. For the specific implementation of each step of the method and the related content as explained, it is possible to refer to the above-described embodiments. The repetition will not be repeated here.

For example, the processor 1420 and the memory 1410 may directly or indirectly communicate with each other. For example, the processor 1420 and the memory 1410 may communicate through a network. The network may comprise a wireless network, a wired network, and/or any combination of a wireless network and a wired network. The processor 1420 and the memory 1410 may also communicate with each other through a system bus, which is not limited in the present disclosure.

For example, the processor 1420 may be embodied as various appropriate processors, processing devices or the like, for example a central processing unit (CPU), a graphics processing unit (GPU) and a network processor (NP); and may also be a digital signal processor (DSP), an application specific integrated circuit (ASIC), a field programmable gate array (FPGA) or other programmable logic devices, a discrete gate or transistor logic device, or a discrete hardware component. The central processing unit (CPU) may be X86 or ARM architecture or the like. For example, the memory 1410 may comprise any combination of various forms of computer-readable storage media, for example a volatile memory and/or a non-volatile memory. The memory 1410 may comprise, for example, a system memory. The system memory, for example, stores an operating system, an application program, a boot loader, a database, and other programs. Various application programs and various data may also be stored in the storage medium.

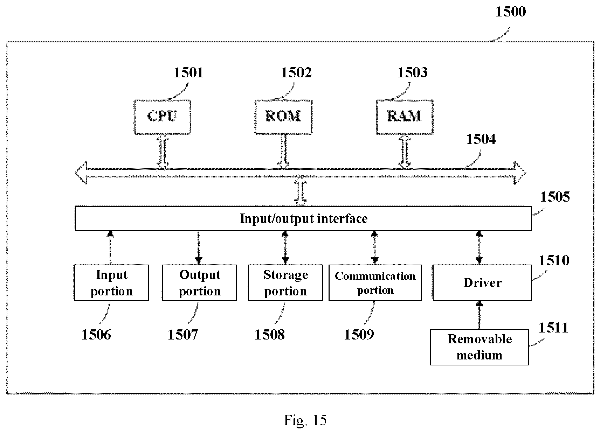

In addition, according to some embodiments of the present disclosure, in a case that various operations/processes according to the present disclosure are implemented by software and/or firmware, they may be implemented from a storage medium or a network to a computer system with a dedicated hardware structure. For example, the computer system 1500 shown in Fig. 15 is installed with programs constituting the software. When the computer system is installed with various programs, it is possible to perform various functions, comprising the functions described above. Fig. 15 is a block view showing an example structure of a computer system that may be employed in an embodiment of the present disclosure.

In Fig. 15, a central processing unit (CPU) 1501 executes various processes according to a program stored in a read only memory (ROM) 1502 or a program loaded from a storage portion 1508 to a random access memory (RAM) 1503. In the RAM 1503, data required when the CPU 1501 executes various processes and the like is also stored as necessary. The central processing unit which is only exemplary, may also be other types of processors, for example the processors described above. The ROM 1502, the RAM 1503, and the storage portion 1508 may be various forms of computer-readable storage media, as described below. It should be noted that although the ROM 1502, the RAM 1503, and the storage portion 1508 are shown in Fig. 15 respectively, one or more of them may be combined or located in the same or different memories or storage modules.

The CPU 1501, the ROM 1502, and the RAM 1503 are connected to each other via a bus 1504. The input/output interface 1505 is also connected to the bus 1504.

The following components are connected to the input/output interface 1505: an input portion 1506, for example a touch screen, a touch panel, a keyboard, a mouse, an image sensor, a microphone, an accelerometer, gyroscope, etc.; an output portion 1507, comprising a display, for example a cathode ray tube (CRT), a liquid crystal display (LCD), a speaker, a vibrator, etc.; a storage portion 1508, comprising a hard disk, a tape, etc.; and a communication portion 1509, comprising a network interface card such as a LAN card, a modem, etc.. The communication portion 1509 allows execution of communication processing via a network such as Internet. It is easy to understand that although the devices or modules in the electronic device 1500 shown in Fig. 15 communicate through the bus 1504, they may also communicate through a network or other means, wherein the network may comprise a wireless network, a wired network, and/or any combination of a wireless network and a wired network.

The driver 1510 is also connected to the input/output interface 1505 as required. A removable medium 1511 such as a magnetic disk, an optical disk, a magneto-optical disk or a semiconductor memory is mounted on the drive 1510 as necessary, so that the computer program read out therefrom is installed into the storage portion 1508 as necessary.

In a case of implementing the above-described series of processes by software, the program constituting a software may be installed from a network such as Internet or a storage medium such as a removable medium 1511.

According to an embodiment of the present disclosure, the process described above in conjunction with the flowchart may be implemented as a computer software program. For example, in an embodiment of the present disclosure, there comprises a computer program product, which comprises a computer program carried on a computer-readable medium, wherein the computer program contains program codes for executing the method shown in the flowchart. In such embodiment, the computer program may be downloaded and installed from the network through the communication portion 1509, installed from the storage portion 1508, or installed from the ROM 1502. When the computer program is executed by the CPU 1501, the above-described functions defined in the method of the embodiment of the present disclosure are executed.

It should be noted that in the context of the present disclosure, a computer-readable medium may be a tangible medium, which may contain or store a program for use by the instruction execution system, apparatus, or device or use in combination with the instruction execution system, apparatus, or device. The computer-readable medium may be a computer-readable signal medium, a computer-readable storage medium or any combination thereof. The computer-readable storage medium may be, for example, but is not limited to: an electrical, magnetic, optical, electromagnetic, infrared, or semiconductor system, device, or apparatus, or a combination thereof. More specific examples of the computer-readable storage medium may comprise, but is not limited to: an electrical connection having one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, a computer-readable storage medium may be any tangible medium that contains or stores a program which may be used by an instruction execution system, apparatus, or device or used in combination therewith. In the present disclosure, the computer-readable signal medium may comprise a data signal propagated in a baseband or as a part of a carrier wave, wherein a computer-readable program code is carried. Such propagated data signal may take many forms, comprising but not limited to an electromagnetic signal, an optical signal, or any suitable combination thereof. The computer-readable signal medium may also be any computer-readable medium other than the computer-readable storage medium. The computer-readable signal medium may send, propagate, or transmit a program for use by an instruction execution system, apparatus, or device or in combination with therewith. The program code contained on the computer-readable medium may be transmitted by any suitable medium, comprising but not limited to: a wire, an optical cable, radio frequency (RF), or the like, or any suitable combination thereof.

The above-described computer-readable medium may be comprised in the above-described electronic device; or may also exist alone without being assembled into the electronic device.

In some embodiments, a computer program is also provided. The computer program comprises instructions, which, when executed by a processor, cause the processor to execute the method of any of the above-described embodiments. For example, the instructions may be embodied as a computer program code.

In an embodiment of the present disclosure, the computer program code for performing the operations of the present disclosure may be written in one or more programming languages or a combination thereof. The above-described programming languages comprise but are not limited to object-oriented programming languages, for example Java, Smalltalk, and C++, and also comprise conventional procedural programming languages, for example "C" language or similar programming languages. The program code may be executed entirely on the user's computer, partly on the user's computer, executed as an independent software package, partly on the user's computer and partly executed on a remote computer, or entirely executed on the remote computer or server. In a case of a remote computer, the remote computer may be connected to the user's computer through any kind of network (comprising a local area network (LAN) or a wide area network (WAN)), or may be connected to an external computer (for example, connected through Internet using an Internet service provider).

The flowcharts and block views in the accompanying drawings illustrate the possibly implemented architectures, functions, and operations of the system, method, and computer program product according to various embodiments of the present disclosure. In this regard, each block in the flowchart or block view may represent a module, a program segment, or a part of code, wherein the module, the program segment, or the part of code contains one or more executable instructions for realizing a specified logic function. It should also be noted that, in some alternative implementations, the functions marked in the block may also occur in a different order from the order marked in the accompanying drawings. For example, two blocks shown in succession which may actually be executed substantially in parallel, may sometimes also be executed in a reverse order, depending on the functions involved. It should also be noted that each block in the block view and/or flowchart, and a combination of the blocks in the block view and/or flowchart, may be implemented by a dedicated hardware-based system that performs the specified functions or operations, or may be implemented by a combination of dedicated hardware and computer instructions.

The modules, components, or units involved in the described embodiments of the present disclosure may be implemented by means of software, or by means of hardware. The names of the modules, components or units do not constitute a limitation on the modules, components or units themselves under a certain circumstance.

The functions described hereinabove may be performed at least in part by one or more hardware logic components. For example, without limitation, the exemplary hardware logic components that may be used comprise: a Field Programmable Gate Array (FPGA), an Application Specific Integrated Circuit (ASIC), an Application Specific Standard Product (ASSP), a System on Chip (SOC), a Complex Programmable Logical device (CPLD) and the like.

According to some embodiments of the present disclosure, a method for accessing media content is provided. The method comprises: displaying a media content collection to be unlocked in response to an interactive operation on a user interface, wherein the user interface is configured to display a first media content in a feed; and displaying the media content collection unlocked in response to an unlocking operation for an access right to the media content collection to be unlocked.

In some embodiments, the displaying of the media content collection to be unlocked in response to the interactive operation on the user interface comprises: displaying the media content collection to be unlocked in response to an interactive operation on a link control in the user interface, wherein the link control corresponds to the media content collection.

In some embodiments, the displaying of the media content collection to be unlocked in response to the interactive operation on the user interface comprises: displaying a creator home page in response to an interactive operation on a control of the creator home page in the user interface, wherein the creator home page comprises a first collection control; and displaying the media content collection to be unlocked in response to an interactive operation on the first collection control.

In some embodiments, the displaying of the media content collection unlocked in response to the unlocking operation for the access right to the media content collection to be unlocked comprises: displaying the media content collection unlocked in response to unlocking the access right to the media content collection to be unlocked using an exchange resource.

In some embodiments, the method further comprises: displaying a second collection control in response to an interactive operation on a setting option control in a user home page; and displaying the media content collection unlocked in response to an interactive operation on the second collection control.

In some embodiments, the method further comprises: displaying an unlocking message, the unlocking message comprising information on the media content collection unlocked; and displaying the media content collection unlocked in response to an interactive operation on the unlocking message.

In some embodiments, the method further comprises: displaying the media content collection unlocked in response to an interactive operation on a first collection control in a creator home page.

In some embodiments, the method further comprises: maintaining an access right to the media content collection unlocked for a user corresponding to the media content collection unlocked in response to the link control being removed.

In some embodiments, the method further comprises: displaying an evaluation result of a user on the media content collection.

In some embodiments, the displaying of the evaluation result of the user on the media content collection comprises: displaying an evaluation window in response to an interactive operation on an evaluation control on a page on which the media content collection is located; and displaying the evaluation result of the user on the media content collection in response to an evaluation operation of the user on the media content collection on the evaluation window.

In some embodiments, the displaying of the evaluation result of the user on the media content collection comprises: displaying an evaluation window in response to at least a portion of media content in the media content collection being played; and displaying the evaluation result of the user on the media content collection in response to an evaluation operation of the user on the media content collection on the evaluation window.

In some embodiments, the link control further corresponds to another function control.

In some embodiments, the method further comprises: obtaining the first media content to be published; generating a link control associated with the first media content, wherein the link control points to the media content collection to be unlocked; and publishing the first media content with the link control to the feed.

In some embodiments, the first media content comprises a video; and the media content collection comprises a video collection.

In some embodiments, the media content collection comprises one or more second media contents.

In some embodiments, the first media content is different from the one or more second media contents.

According to other embodiments of the present disclosure, a device for accessing media content is provided. The device comprises: a first display unit configured to display a media content collection to be unlocked in response to an interactive operation on a user interface, wherein the user interface is configured to display a first media content in a feed; and a second display unit configured to display the media content collection unlocked in response to an unlocking operation for an access right to the media content collection to be unlocked.

According to other embodiments of the present disclosure, an electronic device is provided. The device comprises: a memory; and a processor coupled to the memory, wherein the memory has instructions stored therein which, when executed by the processor, cause the electronic device to perform the method according to any one of the embodiments of the present disclosure.

According to still other embodiments of the present disclosure, a computer readable storage medium (for example, a non-transitory computer readable storage medium) is provided. The computer readable storage medium has stored thereon computer program which, when executed by a processor, implement the method according to any one of the embodiments of the present disclosure.

According to still other embodiments of the present disclosure, a computer program is provided, which comprises instructions that, when executed by a processor, cause the processor to perform the method according to any one of the embodiments of the present disclosure.

According to some embodiments of the present disclosure, a computer program product is provided, which comprises instructions that, when executed by a processor, implement the method according to any one of the embodiments of the present disclosure.

The above description is only an explanation of some embodiments of the present disclosure and the applied technical principles. Those skilled in the art should understand that the scope of disclosure involved in this disclosure is not limited to the technical solutions formed by the specific combination of the above technical features, and at the same time should also cover other technical solutions formed by arbitrarily combining the above-described technical features or equivalent features without departing from the above disclosed concept. For example, the above-described features and the technical features disclosed in the present disclosure (but not limited thereto) having similar functions are replaced with each other to form a technical solution.

In the description provided herein, many specific details are elaborated. However, it is understood that the embodiments of the present disclosure may be implemented without these specific details. In other cases, in order not to obscure the understanding of the description, the well-known methods, structures and technologies are not demonstrated in detail.

In addition, although the operations are depicted in a specific order, this should not be understood as requiring these operations to be performed in the specific order shown or performed in a sequential order. Under certain circumstances, multitasking and parallel processing might be advantageous. Likewise, although several specific implementation details are contained in the above discussion, these should not be construed as limiting the scope of the present disclosure. Certain features that are described in the context of individual embodiments may also be implemented in combination in a single embodiment. Conversely, various features described in the context of a single embodiment may also be implemented in multiple embodiments individually or in any suitable sub-combination.

Although some specific embodiments of the present disclosure have been described in detail by way of examples, those skilled in the art should understand that the above examples are only for the purpose of illustration but not for limiting the scope of the present disclosure. It should be understood by those skilled in the art that modifications to the above-described embodiments may be made without departing from the scope and spirit of the present disclosure. The scope of the present disclosure is defined by the appended claims.

## Claims

1. A method for accessing media content, comprising:
displaying a media content collection to be unlocked in response to an interactive operation on a user interface, wherein the user interface is configured to display a first media content in a feed; and
displaying the media content collection unlocked in response to an unlocking operation for an access right to the media content collection to be unlocked.

2. The method according to claim 1, wherein the displaying of the media content collection to be unlocked in response to the interactive operation on the user interface comprises:
displaying the media content collection to be unlocked in response to an interactive operation on a link control in the user interface, wherein the link control corresponds to the media content collection.

3. The method according to claim 1, wherein the displaying of the media content collection to be unlocked in response to the interactive operation on the user interface comprises:
displaying a creator home page in response to an interactive operation on a control of the creator home page in the user interface, wherein the creator home page comprises a first collection control; and
displaying the media content collection to be unlocked in response to an interactive operation on the first collection control.

4. The method according to any one of claims 1 to 3, wherein the displaying of the media content collection unlocked in response to the unlocking operation for the access right to the media content collection to be unlocked comprises:
displaying the media content collection unlocked in response to unlocking the access right to the media content collection to be unlocked using an exchange resource.

5. The method according to any one of claims 1 to 4, further comprising:
displaying a second collection control in response to an interactive operation on a setting option control in a user home page; and
displaying the media content collection unlocked in response to an interactive operation on the second collection control.

6. The method according to any one of claims 1 to 5, further comprising:
displaying an unlocking message, the unlocking message comprising information on the media content collection unlocked; and
displaying the media content collection unlocked in response to an interactive operation on the unlocking message.

7. The method according to any one of claims 1 to 6, further comprising:
displaying the media content collection unlocked in response to an interactive operation on a first collection control in a creator home page.

8. The method according to claim 2, further comprising:
maintaining an access right to the media content collection unlocked for a user corresponding to the media content collection unlocked in response to the link control being removed.

9. The method according to any one of claims 1 to 8, further comprising:
displaying an evaluation result of a user on the media content collection.

10. The method according to claim 9, wherein the displaying of the evaluation result of the user on the media content collection comprises:
displaying an evaluation window in response to an interactive operation on an evaluation control on a page on which the media content collection is located; and
displaying the evaluation result of the user on the media content collection in response to an evaluation operation of the user on the media content collection on the evaluation window.

11. The method according to claim 9, wherein the displaying of the evaluation result of the user on the media content collection comprises:
displaying an evaluation window in response to at least a portion of media content in the media content collection being played; and
displaying the evaluation result of the user on the media content collection in response to an evaluation operation of the user on the media content collection on the evaluation window.

12. The method according to claim 2, wherein the link control further corresponds to another function control.

13. The method according to any one of claims 1 to 12, further comprising:
obtaining the first media content to be published;
generating a link control associated with the first media content, wherein the link control points to the media content collection to be unlocked; and
publishing the first media content with the link control to the feed.

14. The method according to any one of claims 1 to 13, wherein:
the first media content comprises a video; and
the media content collection comprises a video collection.

15. The method according to any one of claims 1 to 14, wherein the media content collection comprises one or more second media contents.

16. The method according to claim 15, wherein the first media content is different from the one or more second media contents.

17. A device for accessing media content, comprising:
a first display unit configured to display a media content collection to be unlocked in response to an interactive operation on a user interface, wherein the user interface is configured to display a first media content in a feed; and
a second display unit configured to display the media content collection unlocked in response to an unlocking operation for an access right to the media content collection to be unlocked.

18. An electronic device, comprising:
a memory; and
a processor coupled to the memory, wherein the memory has instructions stored therein which, when executed by the processor, cause the electronic device to perform the method according to any one of claims 1 to 16.

19. A computer readable storage medium having stored thereon computer program which, when executed by a processor, implement the method according to any one of claims 1 to 16.

20. A computer program, comprising:
instructions that, when executed by a processor, cause the processor to perform the method according to any one of claims 1 to 16.
